(19) Europäisches Patentamt
European Patent Office
Office européen des brevets

(11) **EP 3 091 847 B1**

(12) **EUROPEAN PATENT SPECIFICATION**

(45) Date of publication and mention
of the grant of the patent:
**18.12.2019 Bulletin 2019/51**

(21) Application number: **15701052.1**

(22) Date of filing: **06.01.2015**

(51) Int Cl.:
*A23G 3/34* $^{(2006.01)}$    *A23G 3/54* $^{(2006.01)}$

(86) International application number:
**PCT/IB2015/050096**

(87) International publication number:
**WO 2015/101969 (09.07.2015 Gazette 2015/27)**

(54) **PROCESS FOR PREPARING A CONFECTIONERY COMPOSITION**

VERFAHREN ZUR HERSTELLUNG EINER SÜSSWARE

PROCÉDÉ POUR LA PRÉPARATION D'UNE COMPOSITION DES CONFISERIES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.01.2014 GB 201400134**

(43) Date of publication of application:
**16.11.2016 Bulletin 2016/46**

(73) Proprietor: **Kraft Foods Schweiz Holding GmbH 6300 Zug (CH)**

(72) Inventors:
• **WOOD, Xavier**
  **Bournville**
  **Birmingham B30 2LU (GB)**
• **HAINES, Rod**
  **St Ives**
  **Cambridgeshire PE27 4LG (GB)**
• **MELLORS, Mark**
  **St Ives**
  **Cambridgeshire PE27 4LG (GB)**

(74) Representative: **Ward, David Ian et al
Marks & Clerk LLP
Alpha Tower
Suffolk Street
Queensway
Birmingham B1 1TT (GB)**

(56) References cited:
EP-A1- 0 923 875        WO-A1-2010/031502
WO-A1-2010/075988    US-A- 3 465 496
US-A1- 2007 104 828    US-A1- 2011 162 783

**Description**

The present invention relates to a process for preparing a confectionery composition and compositions made thereby.

There is a continuing desire to provide new products and eating experiences for consumers. Liqueur filled chocolates are popular and provide a liquid sensation when the consumer bites through the chocolate shell and releases the filling. However, they are quite messy to consume. Caramel filled chocolates are also popular but provide a different impact on the consumer due to the high viscosity of the caramel filling.

WO2010/031502 (NESTEC) describes a complex method for preparing liquid-filled capsules. Discrete droplets of a cold liquid filling are introduced into a flow of fat-based confectionery material such that the cold liquid droplets cause the fat-based confectionery material to solidify around them to form the liquid-filled capsules. The resulting capsules are fragile and are deposited onto a grid conveyer and from there directly into moulds already containing a chocolate shell, whist excess chocolate is recycled. It is necessary to use an excess of chocolate in order to prevent the droplets from coalescing so throughput is low and a large proportion of the fat-based confectionery material must be recycled. The resulting liquid-filled capsules are small and irregularly shaped.

WO2006/023066 describes a panned sugar shelled confectionery having a filling that is injected by means of a forming pin. The forming pin is part of a modified cold forming apparatus comprising two forming rolls with forming pockets, wherein at least one continuous groove extends around the circumference of the forming roll. The forming pin fits into the groove and the filling can be injected into the empty cavity created by the pin. The shape and maximum volume of the filling are therefore determined by the shape of the forming pin.

WO98/38871 describes the preparation of coated confectionery products using a pair of forming elements having a multiplicity of recesses in a surface thereof. The process employs solid fillings which are supplied to the nip in discrete pieces from a hopper or as a continuous sheet.

The present invention provides a process for preparing a confectionery composition that alleviates one or more of the problems mentioned above.

According to a first aspect of the present invention there is provided a process for the preparation of a confectionery composition comprising

supplying molten chocolate and a liquid filling to a nip defined by the juxtaposition of a pair of forming elements, at least one of said pair of forming elements having a plurality of recesses in its peripheral surface; and

passing the chocolate and the liquid filling through said nip by motion of said forming elements;

wherein the liquid filling is supplied in pulses above the nip so as to coincide with the presentation of recesses at the nip;

so as to cause the chocolate to envelop the liquid filling and thereby forming liquid-filled chocolate capsules interconnected by a web of chocolate, wherein the molten chocolate is supplied directly to the nip.

It will be understood that capsules may be formed when recesses are present on just one forming element. However, the process would more commonly be carried out with recesses on both forming elements. The respective recesses in the two forming elements are arranged so that they are in register at the nip. i.e. a recess in one forming element is arranged to be opposite a recess in the second forming element so that together they form cavity at the nip.

In one embodiment there is provided a process for the preparation of a confectionery composition comprising

supplying molten chocolate and a liquid filling to a nip defined by the juxtaposition of a pair of forming elements, each of said pair of forming elements having a plurality of recesses in its peripheral surface; the forming elements being arranged so that respective recesses in the two forming elements are in register at the nip; and

passing the chocolate and the liquid filling through said nip by motion of said forming elements;

wherein the liquid filling is supplied in pulses above the nip so as to coincide with the presentation of pairs of recesses at the nip;

so as to cause the chocolate to envelop the liquid filling and thereby forming liquid-filled chocolate capsules interconnected by a web of chocolate.

A composition is considered liquid in the context of the present invention if it is liquid at standard ambient temperature and pressure (SATP, 25°C and 100kPa).

The liquid filling will be present in each capsule in the form of a liquid bubble. It will be understood that the shape of the bubble is determined by a number of factors including the amount of liquid filling in each capsule, the bulk properties of the liquid filling and the shape of the recesses in the forming elements. However, the shape of the liquid bubble will be independent of the means for delivering the liquid filling since the liquid filling is released above the nip. In contrast, the WO2006/023066 process delivers a filling by means of a forming pin which extends below the nip. The shape of the filling is therefore determined by the shape of the forming pin.

The nip is defined by a spacing between the forming elements. In one embodiment the nip is defined by a spacing between the forming elements which is from 0.5 to 4mm, from 1 to 3mm or approximately 2mm. The chocolate and the liquid filling are typically passed through the nip by a downward motion.

In one embodiment the liquid filling is released from a nozzle. In a particular embodiment, the liquid filling is released from a series of nozzles, each nozzle being arranged to supply the liquid filling to a series of recesses. By providing a series of nozzles, multiple capsules can be prepared simultaneously. Each nozzle can be employed to supply the same liquid filling such that the resulting capsules all have the same filling. Alternatively, the series of nozzles can be employed to supply a variety of liquid fillings.

The liquid filling is released intermittently in order to fill the chocolate capsule, rather than forming part of the web. The liquid filling is supplied for a fixed period and then the supply is stopped; this is known as a pulse. In one series of embodiments, a pulse lasts at least 0.1, 0.2, 0.5, 1, 2, 3, or 4 seconds. In one series of embodiments, a pulse lasts no more than 5, 4, 3, 2, 1, 0.5 seconds. The timing may be better understood by the pulse rate, the number of pulses in a given period. In one series of embodiments, the pulse rate is at least 15, 30, 45, 60, 75, 90, 105, 120, 135, 150, 165, 180, 195, 210, 225 or 240 pulses per minute. In one series of embodiments, the pulse rate is less than 500, 400, 300, 200, 100, 60, 30, 20 or 15 pulses per minute.

A single pulse of liquid filling will typically be employed to fill the capsule. However, more than one pulse of liquid filling could be used to fill the capsule if desired.

According to the invention the molten chocolate is supplied directly to the nip.

In one such embodiment the process can be considered to be a drop rolling process. Drop roll forming is well known in the art for producing small solid articles and is described in "Chocolate, Cocoa, and Confectionery Science and Technology", 3rd edition, 1999 pp184 to 186 by Minifie. However, standard drop rolling apparatus has not been employed to produce liquid-filled products. In one embodiment molten chocolate is presented above the forming elements (e.g. rollers) and "floods" the space between the forming elements. When the liquid filling is pulsed, it then displaces a portion of the molten chocolate. This means that the resulting capsule consists of chocolate and liquid filling only i.e. the liquid filling completely fills the cavity in the capsule and there is no air gap.

In one embodiment where chocolate is supplied directly to the nip, the chocolate and the liquid filling are supplied by means of a one-shot process. One-shot (also known as single-shot) depositing is well known and is described in Industrial Chocolate Manufacture and Use (Fourth Edition), edited by Stephen T. Beckett (2009):399 - 404. The chocolate and the liquid filling would be deposited using a concentric nozzle such that the chocolate encloses the liquid filling.

In one embodiment not forming part of the invention the chocolate is supplied indirectly to the nip by supplying it to the recesses of the forming elements and moving the thus supplied recesses to the nip. The chocolate must be in a molten state when supplied to the recesses so that it completely covers the surfaces of the recesses. In this embodiment the chocolate capsule might not be completely filled with the liquid filling, an air gap is possible. In one such embodiment, molten chocolate is supplied indirectly to the nip by spraying.

In one embodiment the forming element is a cylindrical roller having a plurality of recesses over its peripheral surface. In this way, the molten chocolate and the liquid filling are passed through the nip by means of the contra-rotation of the cylindrical rollers about their respective longitudinal axes. In one such embodiment the longitudinal axes lie in a substantially horizontal plane. In one embodiment the cylindrical roller has an outer diameter of approximately 30cm.

The forming elements are typically cooled below ambient temperature. In one embodiment, the forming elements are cooled to a temperature of from -15°C to 0°C or from -20°C to -10°C or from -30°C to -20°C. This temperature is suitable for causing molten chocolate to at least partially solidify as it passes through the forming elements, as in a drop rolling process. It will be understood that the molten chocolate solidifies to form solid chocolate capsules having the liquid filling therein.

The dimensions (size and the shape) of the capsules are determined by the size and the shape of the recesses in the forming elements. In one embodiment all of the recesses in the forming element(s) have identical dimensions. In this way, all of the resulting chocolate capsules will have the same dimensions. In another embodiment, the recesses in the forming elements have a variety of dimensions. In this way, the resulting chocolate capsules will have a variety of dimensions. In one embodiment, each forming element comprises at least 2, 3, 4, 5 or 6 types of recess having different dimensions.

The recesses can have a variety of shapes to achieve the desired shape in the resulting capsules. For example, a spherical capsule can be obtained by two opposing hemispherical recesses. Typically, the recesses will have a rounded peripheral extent in order to provide a good release of the resulting capsule from the forming element.

The following comments apply to at least one recess and/or the average properties of all of the recesses.

In one embodiment the recess(es) is/are hemispherical. It will be understood that a hemispherical recess provides a circular outline on the surface of the forming element. In alternative embodiments the recesses provide an outline on the surface of the forming element which is oval, square, rectangular, triangular, pentagonal, hexagonal or the shape of any other regular polygon. The outline of the recess(es) could also have a star shape, an egg shape, a heart shape, a lozenge shape etc. In a particular embodiment all of the recesses are hemispherical. It will be understood that the outline will typically be rounded for practical reasons.

In one embodiment the recess(es) has/have a diameter of at least 10, 11, 12, 13, 14, 15, 20, 25 or 30mm. In one embodiment the recess(es) has/have a diameter of less than 60, 50, 40, 30, 20, 10mm. In a particular embodiment the recess(es) has/have a diameter of from 10 to 16mm or from 12 to 14mm. The diameter of a recess is measured across the surface of the forming element.

In one embodiment the recess(es) has/have a depth of at least 5, 5.5, 6, 6.5, 7, 7.5, 10, 12.5 or 15mm. In one embodiment the recess(es) has/have a depth of less than 30, 25, 20, 15, 10, or 5mm. The depth of a recess is measured perpendicular to the surface of the forming element.

Smaller sizes are useful if the capsules are to be incorporated into a larger product e.g. placed in an edible shell. Larger sizes are useful if the capsules are to be a stand alone unit.

The liquid-filled chocolate capsules are interconnected by a thin web of chocolate. If desired, the web can be removed by means of a deflashing step.

In one embodiment the process comprises a further step of separating the liquid-filled chocolate capsules from the web. In one such embodiment the capsules are separated from the web by tumbling in a drum which is perforated so that only the web pieces pass through.

In one such embodiment the process comprises an additional step of panning the capsules after they are separated from the web. Panning increases the robustness and stability of the capsules.

In one embodiment the process comprises a further step of placing the liquid-filled chocolate capsules in an edible shell. The capsules may be separated from the web before being placed in the edible shell.

The resulting product provides a non-messy liquid sensation when the shell is bitten into by the consumer. The presence of the liquid in a plurality of capsules renders the composition convenient to eat, without significant risk of spillage.

In one embodiment in which the capsules are placed in the edible shell, the shell is then backed off and thereby encloses the capsules. Alternatively, in another embodiment, the capsules are placed in the edible shell, which remains open so that the capsules remain visible.

The invention also resides in the products producible by the process of the first aspect of the invention.

According to a second aspect of the present invention there is provided a web of interconnected liquid-filled chocolate capsules, wherein

the chocolate capsules are interconnected by a web of uniform thickness.

In a particular embodiment each chocolate capsule in the web comprises a bubble of liquid filling, wherein the bubble is substantially spherical.

The shaped confectionery centres described in WO2006/023066 have an elongate void therein as a result of the use of a forming pin. Figures 7a and 7b of WO2006/023066 show the webbing between the shaped centres, which has a raised channel extending between the shaped pieces formed. Since the webbing has a raised channel, it does not have uniform thickness (substantially the same thickness throughout).

According to a third aspect of the present invention there is provided a liquid-filled chocolate capsule, wherein the wall of the chocolate capsule has uniform thickness.

According to a fourth aspect of the present invention there is provided a confectionery composition comprising a plurality of chocolate capsules each having a liquid filling therein, wherein

each of the chocolate capsules has substantially the same diameter; and/or

each of the capsules has a capsule wall of substantially the same thickness.

According to a fifth aspect of the present invention there is provided a confectionery composition comprising an edible shell having a plurality of liquid-filled chocolate capsules therein, wherein

the capsules have an average outer diameter of at least 10mm.

In one embodiment the edible shell is a sugar-based confectionery shell or a fat-based confectionery shell. In one embodiment, the fat-based confectionery shell is a chocolate shell.

The dimensions (size and shape) of the edible shell can vary from small bite-size pieces to large tablets. The present invention is particularly beneficial for larger products where a liquid filling would otherwise be very messy to consume.

In one embodiment the edible shell has a length of at least 3, 4, 5, 6, 8, 10, 12, 15, 20 or 25 cm. In one embodiment the edible shell has a length of less than 30, 25, 20, 15 or 10cm.

In one embodiment the edible shell has a thickness of at least 1, 2, 3, 4, 5, 6, 7, 8, 9 or 10mm. In one embodiment the edible shell has a thickness of less than 15, 12, 8, 6, 5, 4, 3 or 2mm. In one embodiment the edible shell has a thickness from 1 to 3mm.

In one embodiment the edible shell has at least 3, 4, 5, 6, 7, 8, 9, 10, 11, 12, 13, 14, 15, 20, 25, 30, 40, 50, 60, 70 or 80 capsules therein. In one embodiment, the edible shell has fewer than 200, 150, 100, 75, 65, 55, 45, 35, 25, 15 or 10 capsules therein.

The edible shell has a cavity therein. In one series of embodiments the capsules constitute at least 25, 30, 35, 40, 45, 50, 55, 60, 65, 70, 75 or 80vol% of the cavity. In one series of embodiment the capsules constitute less than 85, 80, 75, 70, 65, 60, 55, 50, 45, 40 or 35vol% of the cavity. In one embodiment the capsules constitute from 40 to 70vol% of the shell cavity.

In one embodiment, the capsules are close packed within the shell so that they cannot move over one another. The close packing is dictated by the size of the capsules and the size of the cavity. For instance, a plurality of spherical capsules of the same size will be limited to 74% packing density if they can be arranged in a hexagonal close packing structure. If the plurality of spherical capsules is confined to a simple cubic packing structure, the packing density is limited to 52%. Simulations have shown that spheres randomly filled into a volume reach packing efficiencies of between 60% and 68%. It is thus understood that, other variations aside, the volume of spherical capsules in a close packed shell can be expected to be in the region of between 52% and 74% of the volume of the cavity in a first approximation. The volume of solid capsules in the cavity can be lower if efficient packing densities are not achieved and lower or higher if the capsules are not spherical.

In one embodiment, all of the capsules in the edible shell are identical e.g. they have the same size, shape, liquid filling etc. In another embodiment the edible shell has a variety of capsules therein. In a particular embodiment the edible shell comprises two types of capsule therein.

In one embodiment the edible shell comprises no further liquid and/or solid component therein, in addition to the capsules. In another embodiment the edible shell has at least one further liquid and/or solid component therein, in addition to the capsules. The liquid component can be the same as or different from the liquid filling in the capsules. In one embodiment the solid component is not chocolate. In one embodiment the edible shell comprises at least 2, 4, 6, 8, 10, 12, 15 or 18wt% of a further liquid and/or solid component in addition to the capsules.

The following comments apply to all aspects of the invention.

The viscosity of the liquid will affect the sensation perceived by the consumer; the lower the viscosity the more liquid the sensation. The viscosity of the liquid filling should be greater than water but less than that of a conventional soft caramel. Viscosity can be described in a number of ways.

The viscosity of common foodstuffs is known from the literature. For example, the following values were obtained from a Viscosity Chart on the BASCO website: http://www.bascousa.com/images/advisors/407%20condensed.pdf.

| | Absolute viscosity (cP) | Temperature (°F/°C) | | Absolute viscosity (cP) | Temperature (°F/°C) |
|---|---|---|---|---|---|
| Butter fat | 42 | 110/43 | Corn syrup | 12000 | 130/54 |
| Butter fat | 20 | 150/66 | Gelatin, 37%solids | 1190 | 110/43 |
| Cottage cheese | 30000 | 65/18 | Fruit juice | 55-75 | 65/18 |
| Cocoa butter | 50 | 140/60 | Honey | 1500 | 100/38 |
| Cocoa butter | 0.5 | 210/99 | Mashed potato | 20000 | 100/38 |
| Condensed milk | 40-80 | 100-120/38-49 | Mayonnaise | 20000 | 70/21 |
| Condensed milk, 75% solids | 2160 | 70/21 | Molasses | 1400-13000 | 100/38 |
| Cream, 45% fat | 48 | 60/16 | Orange juice concentrate (30 brix) | 630 | 70/21 |
| Milk | 2.0 | 65/18 | Orange juice concentrate (30 brix) | 91 | 175/79 |
| Yoghurt | 152 | 105/41 | Sorbitol | 200 | 70/21 |
| Caramel | 400 | 140/60 | Toffee | 87000 | 100/38 |
| Chocolate | 17000 | 120/49 | Tomato paste, 30% | 195 | 65/18 |
| Chocolate milk | 280 | 120/49 | Olive oil | 40 | 100/38 |
| Coffee, 30-40% liquor | 10-100 | 70/21 | Palm oil | 43 | 100/38 |

The liquid filling may be a Newtonian liquid or a non-Newtonian liquid. The viscosity of Newtonian liquids is independent of the rate of shear (mixing) but changes with temperature (e.g. water, ethanol, glycerol). Non-Newtonian liquids (e.g. chocolate) are affected by the presence of solids in suspension so their viscosity depends on temperature and the rate of shear.

Viscosity can be measured using a rotational viscometer (or rheometer) such as the Bohlin, Brookfield or Haake viscometer. In one embodiment viscosity is measured using a Bohlin CV050 rheometer. In another embodiment viscosity is measured using a Brookfield RVDVIII Ultra rheometer.

In one embodiment the liquid filling is a Newtonian liquid and has a viscosity measured at 25°C of no more than 20, 15, 10, 5, 3, 2, 1, 0.5, 0.1, 0.01 or 0.001Pa.s.. In one embodiment the liquid filling is a Newtonian liquid and has a viscosity measured at 25°C of at least 0.001, 0.01, 0.05, 0.1, 0.5, 1, 2, 3, 4 or 5Pa.s. In a particular embodiment the liquid filling has a viscosity at 25°C of from 0.05 to 0.07. For comparison, water has a viscosity at 25°C of approximately $8.94 \times 10^{-4}$Pa.s.

The viscosity of the liquid filling can be measured using a Bohlin CV050 rotational rheometer at a constant temperature of 25°C. The effect of shear can be determined by increasing the shear stress from 1 to 10Pa.

In one series of embodiments the liquid filling has a viscosity measured at $10s^{-1}$ of less than 100,85 or 60Pa.s at 25°C; of less than 50,35 or 10Pa.s at 35°C; and/or less than 25, 15, 5 or 1 Pa.s at 45°C.

In one series of embodiments the liquid filling is a non-Newtonian liquid and has a viscosity measured at 30°C of less than 15Pa.s at $1s^{-1}$, less than 13Pa.s at $10s^{-1}$ and/or less than 7Pa.s at $100s^{-1}$.

The viscosity of the liquid filling can be described with reference to the Power Law (or Ostwald) Model. This fits a typical viscosity vs shear rate curve and takes the form of:

$$y = Kx^{n-1}$$

Where y = viscosity, x = shear rate, K = consistency coefficient (viscosity at a shear rate of $1s^{-1}$) and n=power law index (or flow law index).

n is a measure of how Newtonian the liquid is. A Newtonian liquid has n = 1, such that y = K i.e. no change in viscosity with shear rate. For a shear thinning liquid n is greater than 0 but less than 1. For a shear thickening liquid n is greater than 1.

In one embodiment the liquid filling has a power law index (n) of from 0.8 to 1.2 or from 0.9 to 1.1. The power law index (n) can be calculated using the following protocol (provided by Brookfield):
Instrument: Brookfield RVDVIII Ultra rheometer fitted with a Small Sample adaptor and spindle/chamber SC4-15/7R. Temperature: 25°C. RPM down-ramp: 50, 40, 30, 20, 10, 5, 2.5, 1.5. 1 minute hold at each speed before recording viscosity value. Plot Viscosity vs Shear rate to determine n.

The pour point of a liquid is the lowest temperature at which it will pour before it becomes semi-solid and loses its flow characteristics. In one embodiment the liquid filling has a pour point of less than 25, 20, 15, 10, 5 or 3°C.

The liquid filling can be any liquid confectionery material which is liquid at standard ambient temperature and pressure (SATP) and includes as an aqueous solution, a water-in-oil emulsion or an oil-in-water emulsion. It will be understood that the liquid filling must be edible.

In one embodiment, the liquid filling is selected from the group consisting of fruit juice; vegetable juice; fruit puree; fruit pulp; vegetable pulp; vegetable puree; fruit sauce; vegetable sauce; honey;; sugar syrup; polyol syrup; hydrogenated starch hydrolysates syrup; emulsions; vegetable oil; glycerin; propylene glycol; ethanol; liqueurs; chocolate syrup, caramel, dairy- based liquids such as milk, cream, etc.; fondant; an isomalt-comprising solution; and combinations thereof. In one such embodiment the liquid filling is selected from the group consisting of fruit juice; vegetable juice; fruit puree; fruit pulp; vegetable pulp; vegetable puree; fruit sauce; vegetable sauce; sugar syrup; polyol syrup; glycerin; caramel and combinations thereof.

In one embodiment the liquid filling is a flavoured sugar or sugar substitute syrup. In one such embodiment the syrup comprises bulk sweetener (e.g. sucrose or polyol), water and flavouring. In one embodiment the sugar or sugar substitute syrup has a solids content of no more than 75%, no more than 60%, no more than 50 or no more than 40%. A reduction in solids content is expected to reduce the viscosity of the liquid filling and thereby provide a greater contrast with the solid chocolate capsule.

In one embodiment the liquid filling is selected from one or more of almond, apple, apricot, banana, basil, butterscotch, blueberry, caramel, cardamom, cherry, chocolate, hazelnut, kiwi, lime, mango, melon, orange, peach, raspberry, strawberry, vanilla syrup. Suitable syrups are commercially available and include those sold under the Monin® brand.

Sugars include sucrose, glucose, fructose, lactose and maltose and any combination thereof). Sugar substitutes include sugar alcohols such as sorbitol, xylitol, mannitol, lactitol and isomalt.

The liquid filling may additionally comprise colourings and/or flavourings. In one embodiment the liquid filling additionally comprises pharmaceutical additives such as medicaments, breath fresheners, vitamins, minerals, caffeine, and mixtures thereof.

A low water activity will assist in rendering the liquid filling microbiologically stable. In one embodiment the liquid filling has a water activity measured at 25°C of 1 or less than 1.0, 0.95, 0.9, 0.8, 0.7, 0.65 or 0.60.

The following comments apply to at least one capsule and/or the average properties of all of the capsules in a given product.

In one embodiment the capsule(s) consist of the chocolate capsule having the liquid filling therein i.e. the liquid filling completely fills the cavity in the capsule and there is no air gap. Such a product is typically obtained when the molten chocolate is applied directly to the nip e.g. by flooding the space between the forming elements.

In one embodiment the capsule(s) consist(s) of the chocolate capsule having the liquid filling and an air gap. i.e. the liquid filling does not completely fill the cavity in the capsule so there is a gap. Such a product is typically obtained when the molten chocolate is applied indirectly to the nip (e.g. by spraying the forming elements at a distance from the nip) and the liquid filling does not completely fill the cavity.

In one embodiment the capsule(s) comprise(s) at least 3, 5, 8, 10, 12, 15, 18, 20 or 25vol% liquid filling. In one embodiment the capsule(s) comprise(s) less than 25, 20, 16, 12, 10 or 5vol% liquid filling. In a particular embodiment the capsule(s) comprise(s) from 10 to 15vol% liquid filling.

In one embodiment the capsule(s) comprise(s) at least 5, 8, 10, 12, 15, 18 or 20wt% liquid filling. In one embodiment the capsule(s) comprise(s) less than 50, 40, 30, 25, 20, 16, 12, 10 or 5wt% liquid filling. In a particular embodiment the capsule(s) comprise(s) from 10 to 20wt% liquid filling.

In one embodiment the capsule(s) is/are generally hemi-spherical, spherical, ovoid, cubic, cuboid, star shaped or heart shaped. In a particular embodiment all of the capsules are spherical.

In one embodiment the capsule(s) has/have an outer diameter of at least 10, 11, 12, 13, 14, 15, 20, 25 or 30 mm. In one embodiment the capsule(s) has/have an outer diameter of no more than 60, 50, 40, 30, 20 or 10mm. In a particular embodiment the capsule(s) has/have an outer diameter of from 10 to 16mm or 12 to 14mm.

In one embodiment the capsule(s) has/have an inner diameter (the size of the cavity within the capsule which contains the liquid filling) of at least 7, 8, 10, 12.5 or 15mm. In one embodiment the capsule(s) has/have an inner diameter of less than 30, 25, 10, 15, 10 or 5mm. In a particular embodiment the capsules have an inner diameter of from 8 to 10mm or from 10 to 15mm.

In one embodiment the capsule(s) has/have a wall thickness (difference between inner and outer diameters) of at least 1, 1.25, 1.5, 1.75, 2, 2.5, 3, 3.5, 4, 5, 8 or 10mm. In one embodiment the capsule(s) has/have a wall thickness (difference between inner and outer diameters) of less than 20, 15, 10, 5, 4.5, 4, 3, 3.5, 3, 2.5 2, 1.75, 1.5, 1.25, or 1mm.

In one embodiment the capsule(s) wall has/have a uniform thickness no matter where it is measured. i.e. the thickness of the capsule wall varies by no more than 15, 10, or 5% as compared to the average thickness of the capsule wall.

The term 'chocolate' in the context of the present invention is not restricted by the various definitions of chocolate provided by government and regulatory bodies. A 'chocolate' may be a dark chocolate, a milk chocolate or a white chocolate.

The chocolate for the liquid-filled chocolate capsules and optionally the edible shell comprises at least one fat. The fat may be cocoa butter, butterfat, a cocoa butter equivalent (CBE), a cocoa butter substitute (CBS), a vegetable fat that is liquid at standard ambient temperature and pressure (SATP, 25°C and 100kPa) or any combination of the above. In a particular embodiment, the chocolate comprises cocoa butter.

CBEs are defined in Directive 2000/36/EC. Suitable CBEs include illipe, Borneo tallow, tengkawang, palm oil, sal, shea, kokum gurgi and mango kernel. CBE's are usually used in combination with cocoa butter. In one embodiment, the chocolate comprises no more than 5wt% CBE's.

The chocolate may comprise a cocoa butter substitute (CBS) (sometimes known as a cocoa butter replacer, CBR) in place of some or all of the cocoa butter. Such chocolate materials are sometimes known as compound chocolate. Suitable CBS's include CBS laurics and CBS non-laurics. CBS laurics are short-chain fatty acid glycerides. Their physical properties vary but they all have triglyceride configurations that make them compatible with cocoa butter. Suitable CBS's include those based on palm kernel oil and coconut oil. CBS non-laurics consist of fractions obtained from hydrogenated oils. The oils are selectively hydrogenated with the formation of trans acids, which increases the solid phase of the fat. Suitable sources for CBS nonlaurics include soya, cottonseed, peanut, rapeseed and corn (maize) oil.

In one embodiment the chocolate comprises fat (e.g. cocoa butter or a cocoa butter equivalent or cocoa butter substitute), a bulk sweetener (e.g. a sugar or sugar substitute) and non-fat cocoa solids (e.g. from cocoa liquor or cocoa mass). Embodiments of the invention will now be described by way of example only in which:

Figures 1a and 1b show a process in accordance with an embodiment of the invention; and
Figure 2 is a diagram showing the pulsing of the liquid filling.
Figure 3 shows a process not in accordance with the invention;
Figure 4 shows a cross-section of a product in accordance with an embodiment of the invention.

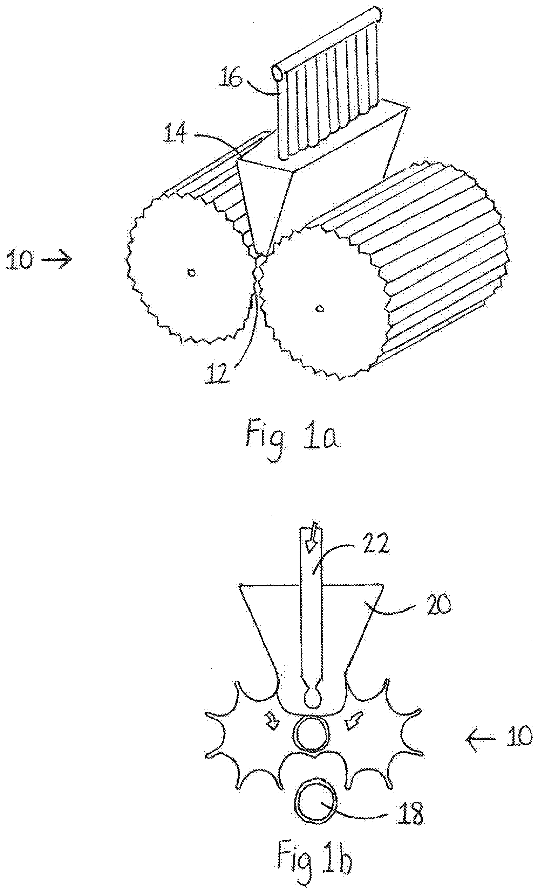

Referring to fig 1a, there is shown a perspective view of an apparatus for use in the present invention. The apparatus comprises a pair of cooled cylindrical rollers 10, each having a large number of hemispherical recesses (not shown) on its peripheral surface. In use, each roller 10 rotates about its longitudinal axis and a nip 12 is formed in the space between the rollers 10. A hopper 14 is located above the rollers 10 and has a long thin opening to flood the space between the rollers 10 with molten chocolate. A series of nozzles 16 is arranged to pass through the hopper 14 and thereby dispense liquid filling just above the nip 12.

The formation of the chocolate coated capsules 18 is shown schematically in fig 1b. Molten chocolate 20 is supplied continuously to flood the nip. The liquid filling 22 is supplied in pulses through the nozzles 16 just above the nip. The liquid filling 22 displaces the molten chocolate 20 such that a bubble of liquid filling is surrounded by the chocolate. The bubble of liquid filling 22 passes through the rollers 10 and the molten chocolate 20 begins to solidify and therefore seals the liquid filling 22 therein. The chocolate capsule 18 then falls from the forming rollers due to gravity and can be transferred to a preformed chocolate shell.

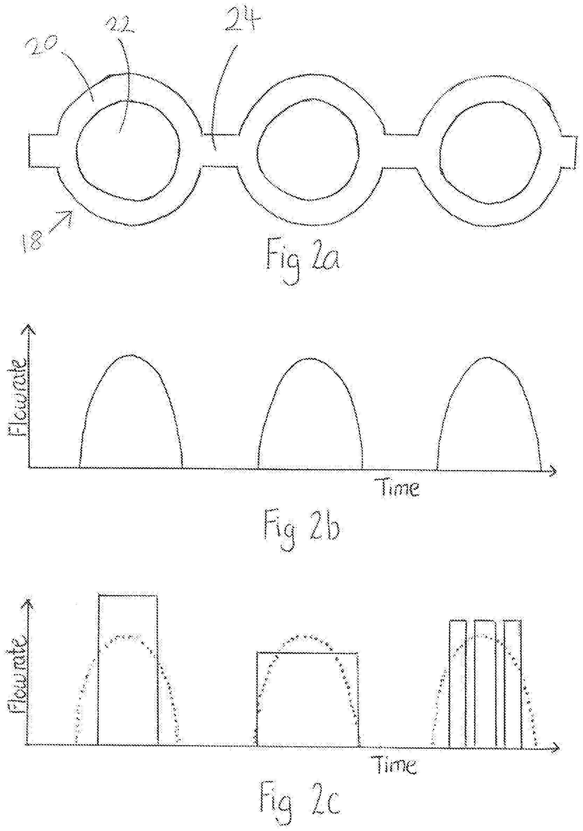

Referring to figure 2a there is shown a portion of a web 24 of 3 interconnected chocolate capsules 18. The chocolate capsules 18 are spherical and have a spherical bubble of liquid filling 22 therein. The capsule wall is made from chocolate 20 and has uniform thickness. The web 24 does not comprise liquid filling because the liquid filling 22 is pulsed to coincide with the presentation of a pair of recesses at the nip 12.

Fig 2b shows the ideal liquid flow rate for obtaining a perfectly spherical bubble of liquid filling. Fig 2c shows options for obtaining a satisfactory filling

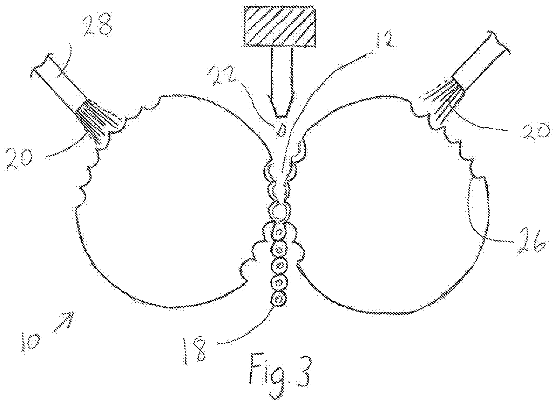

Referring to figure 3 there is shown a method, not forming an embodiment of the invention, for applying molten chocolate 20 indirectly to the nip 12. The molten chocolate 20 is applied to the recesses 26 in the forming rollers 10 by spraying from nozzles 28. The forming rollers 10 are then rotated so that the chocolate coated recesses 26 are moved to the nip 12. The liquid filling 22 is then delivered in pulses to the nip 12 and enclosed by the chocolate coated recesses 26.

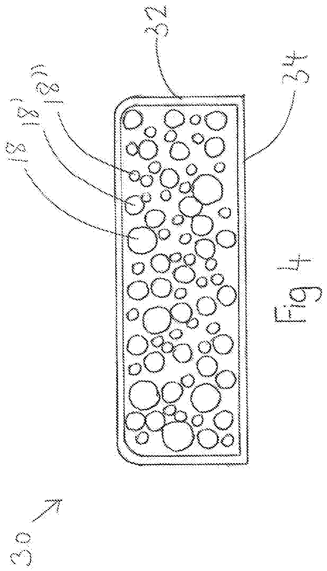

Fig 4 shows a cross-section of a chocolate bar 30 comprising a plurality of liquid-filled chocolate capsules 18, 18', 18" therein. There are three sizes of capsules; the capsules 18 have a larger diameter than the capsules 18' which have a larger diameter than the capsules 18"'. The capsules can be prepared using the method shown in figures 1 or 3 using three sizes of recesses 26 on the forming rollers 10. The capsules 18, 18' 18" are then deposited in a chocolate shell 32 which is subsequently backed off with additional chocolate 34 to enclose the capsules 18, 18' 18"'.

METHODOLOGY

The viscosity of the liquid filling was determined using a Bohlin CV050 rheometer at constant temperature (25°C) with shear stress being increased from 1 to 10Pa. The following example shows the measurement of the viscosity of a commercially available caramel syrup (Le sirop de Monin® caramel, available from Monin (Bourges, France)). The syrup has the following ingredients: sugar, water, flavouring, natural plant extracts, colouring agent: E150a, acidifying agent: citric acid.

| Viscosity @ 25°C (Pa.s) | | |
|---|---|---|
| Shear Rate (1/s) | Shear Stress (Pa) | Viscosity (Pa.s) |
| 16.3 | 1 | 0.0612 |
| 20.9 | 1.29 | 0.0617 |
| 26.7 | 1.67 | 0.0624 |
| 34.3 | 2.15 | 0.0628 |
| 44.1 | 2.78 | 0.0631 |
| 56.6 | 3.59 | 0.0634 |
| 72.9 | 4.64 | 0.0636 |
| 94.2 | 5.99 | 0.0636 |
| 121.5 | 7.74 | 0.0638 |
| 156.5 | 10 | 0.0639 |

It can be seen that the viscosity of the caramel changes only slightly as the shear rate increases from 16.3 to $156.5s^{-1}$; the viscosity of the caramel is 0.06Pa.s under the conditions of measurement.

EXAMPLE 1 - A chocolate bar consisting of a chocolate shell with chocolate capsules having a liquid filling (Monin® caramel) therein.

The chocolate is a conventional milk chocolate (density 1265kg/m$^3$) and the caramel is as described above.

The chocolate capsules were made using the process shown in figures 1a and 1b (drop rolling). The forming rollers each had a diameter of 30cm and each forming roller had 1224 hemispherical recesses (diameter 10mm) in its surface. The resulting capsules were spherical, having an outer diameter of 10mm and a capsule wall thickness of 2mm. The cavity within the capsule was completely filled with liquid. The volume of the liquid filling relative to the total capsule can be calculated from the formula for the volume of a sphere: $4/3\pi r^3$. $4/3\pi 3^3$ / $4/3\pi 5^3$ = $3^3/5^3$ 21.6%.

The capsules were placed in a pre-formed chocolate shell having dimensions of 60mmx30mmx30mm backed off with chocolate. The resulting chocolate bar provided a liquid sensation when bitten into without spillage of the low viscosity caramel syrup.

EXAMPLE 2 - A chocolate bar consisting of a chocolate shell with chocolate capsules having a liquid filling (raspberry syrup) therein.

The chocolate is a conventional milk chocolate and the raspberry syrup has the following properties: water activity 0.8, viscosity: Newtonian, 0.06 at 25°C, density 1333 kg/m$^3$.

The capsules were prepared using the process shown in figure 3. The forming rollers were as described in relation to example 1 and the resulting capsules were spherical, having an outer diameter of 10mm and a capsule wall thickness of 2mm. The cavity within the capsule was incompletely filled with liquid. Each pulse was slightly less than that required to fill the cavity. Hence the volume of the liquid filling relative to the total capsule was approximately 18%.

## Claims

1.  A process for the preparation of a confectionery composition comprising supplying molten chocolate (20) and a liquid filling (22) to a nip (12) defined by the juxtaposition of a pair of forming elements (10), at least one of said pair of forming elements (10) having a plurality of recesses in its peripheral surface; and

    passing the chocolate (20) and the liquid filling (22) through said nip (12) by motion of said forming elements (10); wherein the liquid filling (22) is supplied in pulses above the nip (12) so as to coincide with the presentation of recesses at the nip (12);

    so as to cause the chocolate (20) to envelop the liquid filling (22) and thereby form liquid-filled chocolate capsules (18) interconnected by a web of chocolate (24), wherein the molten chocolate (20) is supplied directly to the nip (12).

2.  The process of claim 1 wherein each of said pair of forming elements (10) has a plurality of recesses in its peripheral surface; the forming elements (10) being arranged so that respective recesses in the two forming elements (10) are in register at the nip (12).

3.  The process of any one of the preceding claims wherein the liquid filling (22) is released from a nozzle (16).

4.  The process of any one of the preceding claims wherein the pulse lasts from 0.1 to 2 seconds and/or wherein the pulse rate is from 15 to 400 pulses per minute.

5.  The process of any one of the preceding claims wherein at least one forming element (10) is a cylindrical roller having a plurality of recesses over its peripheral surface.

6.  The process of any one of the preceding claims wherein the forming elements (10) are cooled to a temperature of from -20°C to -10°C.

7.  The process of any one of the preceding claims further comprising a step of separating the liquid-filled chocolate capsules (18) from the web (24).

8.  The process of claim 7 further comprising a step of placing the separated liquid-filled chocolate capsules (18) in an edible shell (32).

9.  The process of any one of the preceding claims, wherein the chocolate capsules (18) are interconnected by a web (24) of uniform thickness, optionally wherein each chocolate capsule in the web comprises a bubble of liquid filling and the bubble is substantially spherical.

10. The process of any one of the preceding claims, wherein each of the chocolate capsules has the same diameter; and/or each of the capsules has a capsule wall of the same thickness.

11. The process of claim 8, wherein the capsules (18) have an average outer diameter of at least 4mm.

12. The process of any one of the preceding claims, wherein at least one capsule (18) comprises from 10 to 22vol% liquid filling (22), optionally wherein the liquid filling (22) is selected from the group consisting of fruit juice; vegetable juice; fruit puree; vegetable puree; fruit sauce; vegetable sauce; honey; sugar syrup; polyol syrup; hydrogenated starch hydrolysates syrup; emulsions; vegetable oil; glycerin; propylene glycol; ethanol; liqueurs; dairy-based liquids such as milk or cream; fondant; an isomalt-comprising solution; and combinations thereof.

13. The process of any one of the preceding claims where the liquid filling (22) has a pour point of less than 10°C.

14. The process of any one of the preceding claims wherein either:

   i) the liquid filling (22) is a Newtonian liquid and has a viscosity measured at 25°C of no more than 1 Pa.s; or
   ii) the liquid filling (22) has a viscosity measured at $10s^{-1}$ of less than 85Pa.s at 25°C; of less than 35Pa.s at 35°C; and/or less than 15Pa.s at 45°C; or
   iii) the liquid filling (22) has a viscosity measured at 30°C of less than 15Pa.s at $1s^{-1}$, less than 13Pa.s at $10s^{-1}$ and/or less than 7Pa.s at $100s^{-1}$.

15. A confectionery composition producible by the process of any one of the preceding claims.


**Patentansprüche**

1. Verfahren zur Herstellung einer Konfektzusammensetzung, umfassend
   Liefern von geschmolzener Schokolade (20) und einer flüssigen Füllung (22) an einen Spalt (12), der durch Nebeneinanderpositionieren eines Paars von Formelementen (10) definiert wird, wobei mindestens eines des Paars von Formelementen (10) eine Mehrzahl von Einbuchtungen in seiner peripheren Oberfläche aufweist; und
   Hindurchführen der Schokolade (20) und der flüssigen Füllung (22) durch den Spalt (12) durch die Bewegung der Formelemente (10);
   wobei die flüssige Füllung (22) in Pulsen über den Spalt (12) geliefert wird, um mit dem Vorlegen von Einbuchtungen an dem Spalt (12) zusammenzutreffen;
   um zu bewirken, dass die Schokolade (20) die flüssige Füllung (22) umhüllt und dadurch flüssigkeitsgefüllte Schokoladekapseln (18) bildet, die durch eine Bahn (24) von Schokolade miteinander verbunden sind, wobei die geschmolzene Schokolade (20) direkt zu dem Spalt (12) geliefert wird.

2. Verfahren nach Anspruch 1, wobei jedes von dem Paar von Formelementen (10) eine Mehrzahl von Einbuchtungen in seiner peripheren Oberfläche aufweist; wobei die Formelemente (10) so angeordnet sind, dass entsprechende Einbuchtungen in den beiden Formelementen (10) am Spalt (12) aufeinander abgestimmt sind.

3. Verfahren nach irgendeinem der vorhergehenden Ansprüche, wobei die flüssige Füllung (22) aus einer Düse (16) freigesetzt wird.

4. Verfahren nach irgendeinem der vorhergehenden Ansprüche, wobei der Puls 0,1 bis 2 Sekunden lang dauert und/oder wobei die Pulsrate 15 bis 400 Pulse pro Minute beträgt.

5. Verfahren nach irgendeinem der vorhergehenden Ansprüche, wobei mindestens ein Formelement (10) eine zylindrische Walze ist, die eine Mehrzahl von Einbuchtungen über ihre periphere Oberfläche aufweist.

6. Verfahren nach irgendeinem der vorhergehenden Ansprüche, wobei die Formelemente (10) auf eine Temperatur von -20 °C bis -10 °C gekühlt werden.

7. Verfahren nach irgendeinem der vorhergehenden Ansprüche, ferner einen Schritt des Abtrennens der flüssigkeitsgefüllten Schokoladekapseln (18) von der Bahn (24) umfassend.

8. Verfahren nach Anspruch 7, ferner einen Schritt des Positionierens der abgetrennten flüssigkeitsgefüllten Schokoladekapseln (18) in eine essbare Schale (32) umfassend.

9. Verfahren nach irgendeinem der vorhergehenden Ansprüche, wobei die Schokoladekapseln (18) durch eine Bahn (24) gleichförmiger Dicke miteinander verbunden sind, wobei wahlweise jede Schokoladekapseln in der Bahn eine Blase von flüssiger Füllung umfasst und die Blase im Wesentlichen kugelförmig ist.

10. Verfahren nach irgendeinem der vorhergehenden Ansprüche, wobei jede der Schokoladekapseln denselben Durchmesser aufweist; und/oder jede der Kapseln eine Kapselwand derselben Dicke aufweist.

11. Verfahren nach Anspruch 8, wobei die Kapseln (18) einen durchschnittlichen Außendurchmesser von mindestens 4 mm aufweisen.

12. Verfahren nach irgendeinem der vorhergehenden Ansprüche, wobei mindestens eine Kapsel (18) 10 bis 22 Vol.-% flüssige Füllung (22) umfasst, wobei wahlweise die flüssige Füllung (22) aus der Gruppe ausgewählt ist, bestehend aus Obstsaft, Gemüsesaft, Obstpüree, Gemüsepüree, Obstsauce, Gemüsesauce, Honig, Zuckersirup, Polyolsirup, Sirup von hydrierten Stärkehydrolysaten, Emulsionen, Pflanzenöl, Glycerin, Propylenglykol, Ethanol, Likören, Flüssigkeiten auf Milchbasis wie Milch oder Sahne, Fondant, einer Isomalt umfassenden Lösung und Kombinationen davon.

13. Verfahren nach irgendeinem der vorhergehenden Ansprüche, wobei die flüssige Füllung (22) einen Pourpoint von weniger als 10 °C aufweist.

14. Verfahren nach irgendeinem der vorhergehenden Ansprüche, wobei entweder:

   i) die flüssige Füllung (22) eine newtonsche Flüssigkeit ist und eine Viskosität, bei 25 °C gemessen, von nicht mehr als 1 Pa·s aufweist; oder
   ii) die flüssige Füllung (22) eine Viskosität, bei 10 s$^{-1}$ gemessen, von weniger als 85 Pa·s bei 25 °C, von weniger als 35 Pa·s bei 35 °C und/oder weniger als 15 Pa·s bei 45 °C aufweist; oder
   iii) die flüssige Füllung (22) eine Viskosität, bei 30 °C gemessen, von weniger als 15 Pa·s bei 1 s$^{-1}$, weniger als 13 Pa·s bei 10 s$^{-1}$ und/oder weniger als 7 Pa·s bei 100 s$^{-1}$ aufweist.

15. Konfektzusammensetzung, die durch das Verfahren nach irgendeinem der vorhergehenden Ansprüche herstellbar ist.

**Revendications**

1. Procédé de préparation d'une composition de confiserie comprenant
   l'alimentation de chocolat fondu (20) et d'un fourrage liquide (22) à un espacement (12) défini par la juxtaposition d'une paire d'éléments de mise en forme (10), au moins l'un de ladite paire d'éléments de mise en forme (10) ayant une pluralité de renfoncements dans sa surface périphérique; et
   le passage du chocolat (20) et du fourrage liquide (22) à travers ledit espacement (12) par le mouvement desdits éléments de mise en forme (10);
   où le fourrage liquide (22) est alimenté par impulsions au-dessus de l'espacement (12) afin de coïncider avec la présentation des renfoncements au niveau de l'espacement (12);
   de manière à amener le chocolat (20) à envelopper le fourrage liquide (22) et ainsi à former des capsules de chocolat fourré de liquide (18) interconnectées par un réseau (24) de chocolat, où le chocolat fondu (20) est alimenté directement à l'espacement (12).

2. Procédé selon la revendication 1, chacun de ladite paire d'éléments de mise en forme (10) ayant une pluralité de renfoncements dans sa surface périphérique; les éléments de mise en forme (10) étant disposés de sorte que les renfoncements respectifs dans les deux éléments de mise en forme (10) se trouvent inscrits au niveau de l'espacement (12).

3. Procédé selon l'une quelconque des revendications précédentes, le fourrage liquide (22) étant libéré depuis une buse (16).

**4.** Procédé selon l'une quelconque des revendications précédentes, l'impulsion durant de 0,1 à 2 secondes et/ou le taux d'impulsion étant de 15 à 400 impulsions par minute.

**5.** Procédé selon l'une quelconque des revendications précédentes, au moins un élément de mise en forme (10) étant un rouleau cylindrique ayant une pluralité de renfoncements sur sa surface périphérique.

**6.** Procédé selon l'une quelconque des revendications précédentes, les éléments de mise en forme (10) étant refroidis à une température de -20°C à -10°C.

**7.** Procédé selon l'une quelconque des revendications précédentes comprenant en outre une étape de séparation des capsules de chocolat fourré de liquide (18) du réseau (24).

**8.** Procédé selon la revendication 7 comprenant en outre une étape de mise en place des capsules de chocolat fourré de liquide séparées (18) dans une enveloppe comestible (32).

**9.** Procédé selon l'une quelconque des revendications précédentes, les capsules de chocolat (18) étant interconnectées par un réseau (24) d'une épaisseur uniforme, optionnellement chaque capsule de chocolat dans le réseau comprenant une bulle de fourrage liquide et la bulle étant sensiblement sphérique.

**10.** Procédé selon l'une quelconque des revendications précédentes, chacune des capsules de chocolat ayant le même diamètre; et/ou chacune des capsules ayant une paroi de capsule de la même épaisseur.

**11.** Procédé selon la revendication 8, les capsules (18) ayant un diamètre externe moyen d'au moins 4 mm.

**12.** Procédé selon l'une quelconque des revendications précédentes, au moins une capsule (18) comprenant de 10 à 22 % en volume de fourrage liquide (22), optionnellement le fourrage liquide (22) étant sélectionné dans le groupe constitué du jus de fruit; du jus de légume; de la purée de fruit; de la purée de légume; de la sauce de fruit; de la sauce de légume; du miel; du sirop de sucre; du sirop de polyol; du sirop d'hydrolysats d'amidon hydrogénés; des émulsions; de l'huile végétale; de la glycérine; du propylène glycol; de l'éthanol; des liqueurs; des liquides à base de produits laitiers tels que le lait ou la crème; du fondant; d'une solution comprenant de l'isomalt; et de leurs combinaisons.

**13.** Procédé selon l'une quelconque des revendications précédentes où le fourrage liquide (22) présente un point d'écoulement inférieur à 10°C.

**14.** Procédé selon l'une quelconque des revendications précédentes dans lequel soit:

i) le fourrage liquide (22) est un liquide newtonien et présente une viscosité mesurée à 25°C de pas plus de 1 Pa·s; soit
ii) le fourrage liquide (22) présente une viscosité mesurée à 10 s$^{-1}$ inférieure à 85 Pa·s à 25°C; inférieure à 35 Pa·s à 35°C; et/ou inférieure à 15 Pa·s à 45°C; soit
iii) le fourrage liquide (22) présente une viscosité mesurée à 30°C inférieure à 15 Pa·s à 1 s$^{-1}$, inférieure à 13 Pa·s à 10 s$^{-1}$ et/ou inférieure à 7 Pa·s à 100 s$^{-1}$,

**15.** Composition de confiserie pouvant être produite selon le procédé selon l'une quelconque des revendications précédentes.

Fig 1a

Fig 1b

Fig 2a

Fig 2b

Fig 2c

Fig.3

Fig 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010031502 A
- WO 2006023066 A
- WO 9838871 A

**Non-patent literature cited in the description**

- Chocolate, Cocoa, and Confectionery Science and Technology. Minifie, 1999, 184-186
- Industrial Chocolate Manufacture and Use. 2009, 399-404
- *Viscosity Chart on the BASCO, http://www.bascou-sa.com/images/advisors/407%20condensed.pdf*